Europäisches Patentamt

European Patent Office

Office européen des brevets

(11) Publication number: **0 176 686**
**B1**

(12) # EUROPEAN PATENT SPECIFICATION

(45) Date of publication of patent specification: **07.02.90**

(21) Application number: **85109271.8**

(22) Date of filing: **24.07.85**

(51) Int. Cl.⁵: **F 16 G 5/06**

(54) **V-Belt.**

(30) Priority: **27.09.84 IT 2286984**

(43) Date of publication of application:
**09.04.86 Bulletin 86/15**

(45) Publication of the grant of the patent:
**07.02.90 Bulletin 90/06**

(84) Designated Contracting States:
**AT BE DE FR GB NL SE**

(56) References cited:
**DE-B-2 944 209**
**US-A-4 127 039**
**US-A-4 583 963**

(73) Proprietor: **INDUSTRIE PIRELLI S.p.A.**
**Piazzale Cadorna, 5**
**I-20123 Milan (IT)**

(72) Inventor: **Tangorra, Giorgio**
**Via Ramazzotti, 12**
**Monza (Milan) (IT)**
Inventor: **Robecchi, Edoardo**
**Via Chiesa, 56**
**Sesto S. Giovanni (Milan) (IT)**

(74) Representative: **Mariani, Giorgio, Dr. et al**
**INDUSTRIE PIRELLI S.p.A. Direzione Brevetti**
**Piazzale Cadorna, 5**
**I-20123 Milano (IT)**

The file contains technical information
submitted after the application was filed and
not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention refers to a V-belt and more particularly to the transversal and longitudinal reinforcing structure in a V-belt.

As known, a V-belt comprises an elastomeric body provided with an embedded resistant insert formed by a plurality of cords of flexible and inextensible material, coplanar and directed according to the longitudinal direction of the belt.

During operation the transmission of motion between the belt and the pulleys is due to the adherence between a portion of the belt delimited by the flanks and the crown of the pulleys.

In many applications the V-belts are not sufficiently rigid in tranversal sense and consequently they suffer considerable deformations assuring no longer a long lasting ratio of transmission. Moreover the reduced transversal rigidity causes transversal deformations of the belt in the groove of the pulley greatly reducing the entire efficiency of the transmission.

Also, the insufficient transversal rigidity can originate the drawback of an excessive absorption of power, with an overheating of the elastomeric material of the belt and a short fatigue life.

A solution to overcome the cited drawbacks consists in using flexible polymeric material, generally elastomeric materials, with a very high hardness. However, in this case, the transversal hardness causes a stiffening in transversal sense, but involves the degree of longitudinal adaptability of the belt to the pulleys with small radii of curvature.

Moreover, it is possible to overcome this latter drawback by making recourse to a cogging on the bothom of the belt with the task of producing improved flexibility and adaptation to the pulleys with small radii of curvature.

However, also in this case further drawbacks are met since being the surface of contact with the pulley reduced, it is possible that excessive pressures can occur in the contact between the belt flanks and the pulley flanks; said pressures are such as not to be tolerated by the belt body.

Although it can be thought to make recourse to further solutions in order to overcome the cited drawbacks and in particular to embed various materials in the elastomeric body of the belt and at the same time to provide the lower portion of the belt with suitable coggings.

Although reaching useful results with these solutions, in some applications they can cause a certain detachment among the contiguous materials inserted in the belt body and can produce a shorter life of the belt.

It could be also thought to make recourse to V-belts comprising fibers of textile or mineral material, so as to transversally stiffen the belt part apt to contact the pulley flanks.

However, in the known solution it is found that the transversal stiffening would produce an excessive stiffening in longitudinal sense, introducing again also in this solution the previously cited drawback, i.e. a poor adaptability of the V-belt in presence of pulleys characterized by small radii of curvature.

Further from US—A—4,127,039 is known a V-belt comprising below the load carrying section a compression section consisting of a platform section having fibers disposed at opposed acute angles to the longitudinal axis of the belt and a section having fibers disposed perpendicular to the longitudinal axis of the belt.

However, also in this solution it is found that the layer on the bottom of the belt having perpendicular fibers could have the drawbacks of a detachment from the remaining upper part of the belt.

Moreover, there is also to be considered the fact that in the cited solution the embedding of the fibers is not always repetitivity equal as it is desired in an industrial production; in other words it is not possible to determine correctly or also experimentally the more suitable conditions for a sure orientation of the fibers in particular directions in function of the elastomeric material.

The present invention aims at realizing a V-belt provided with a very high transversal rigidity apt to avoid the wedging contact of the belt in the grooves of the pulleys in presence of stresses, without compromising the longitudinal flexibility necessary for allowing its winding on small radii of curvature, the whole so as to overcome all the drawbacks of the state of the art with a solution which can be applied on a large industrial scale.

The object of the present invention is a V-belt comprising a body of polymeric flexible material, a plurality of inextensible cords arranged parallelly to one another on a ring concentric with the belt and oriented according to the longitudinal direction of the belt, a portion of said body, below the said cords, being delimited by flanks adapted to contact corresponding surfaces of the groove of a pulley in a transmission system, at least said portion comprising a plurality of layers said belt being characterized in that each layer has fibers oriented in a single direction, the layers alternately overlapping with one layer having fibers substantially oriented in the longitudinal direction, and another layer having fibers oriented in a substantially transverse direction, the said plurality of layers comprising a layer with fibers oriented in one of said two directions, bonded with two adjacent layers, both having fibers oriented in the other of said directions, the thickness of each layer being less than, or at most, equal to the average length of the fibers present in the layer.

The term "average length of the fibers", as used herein is intended to mean that length determined by the greater number of fibers present in the layer and having a certain length value.

Consequently the characteristics of the invention are two.

The first characteristic, as said, is that relating to a plurality of layers of flexible polymeric material, in particular elastomeric material, overlapped with a different orientation.

In this solution each layer comprises fibers oriented in a single direction so that on their whole all the layers determine a pre-arranged order of fibers having a substantially longitudinal direction to the belt, alternating to fibers having a substantially transversal direction.

In practice, according to this first characteristic, there are originated, at least in the belt portion delimited by the flanks and apt to go into contact with the pulley crown, ordinate networks in which the meshes of each network are formed by fibers, i.e. discontinuous elements, which are crossed and substantially at 90° between them.

The originated various overlapped networks are of a high number, for instance it is possible to have 20 or 30 overlapped layers, being said layers formed by approaching raw elastomeric sheets embedding the fibers so as to form through the uncured adhesion a single layer of a desired thickness which is used as unfinished product for the formation of the belt and is subsequently shaped and stabilized in the cross-linking process of the elastomer during the belt vulcanization.

The second characteristic is linked to the dimension of the thickness of each one of the single layers comprising fibers oriented in one and in the other of the two belt main directions, the longitudinal one or the transversal one.

According to this characteristic the thickness of each layer has not any whatsoever value, but it is closely linked to the value of the average length of the fibers embedded in the layer, i.e. the thickness of each layer is less or at most equal to the average length of the fibers.

It is not possible to clearly explain the reasons for which the combination of the two previously cited characteristics leads to the overcoming of all the drawbacks of the past found in the conventional V-belts.

As regards this, the Applicant can supply only some hypotheses, without this constituting a limitation to the purposes of the invention validity.

The validity of the present solution of comprising layers with fibers oriented in a first direction comprised between two adjacent layers with fibers directed in the transversal direction to the first direction is to be seen in connection with the arising of the various stresses to which a V-belt can be subjected during the transmission of motion.

If for instance the belt should be realized without alternating layers having crossed fibers, but with the reinforcing fibers all oriented in the transversal direction in order to have a high rigidity in said direction and a high flexibility in the longitudinal direction, the effect realized by the present invention should not be obtained.

In fact, the transversal compression exerted by the grooves of the pulleys during the working should be accomplished by deformations in the two radial and longitudinal directions, which tend to cause a "detachment" effect between the layers and the fibers, since the stresses in said directions should be borne by the sole elastomeric material.

Instead, the alternating layer arrangement permits a reduction in the deformations produced by the transversal compression stress with a consequent increasing both of the transversal rigidity of the belt and of its fatigue life.

This result that apparently seems to be valid for any layer embedding fibers cannot be achieved in practice when the thickness of the layer is greater with respect to the length of the fiber embedded at its inside.

In practice it is found that realizing a network arrangement among the fibers of contiguous planes, i.e. making the thickness thinner with respect to the length of each fiber, the conditions of mutual anchoring are improved, moreover, the most appreciable result is also reached by using the solution in which the thickness of the layers is led to values which are lower than one half of the average length of the fibers.

A further explanation of the validity of the solution relating to the use of the layer thicknesses with values considerably lower or at most equal to the average length of the fibers embedded in each layer, can depend on the fact that with said thicknesses a unidirectional orientation of the fibers themselves is obtained very probably in the calendering steps by which the fibers are oriented in the elastomeric material; said unidirectional orientation would result more determined and sure of that which can be obtained with thicknesses considerably greater or anyhow greater than the length of the fibers themselves.

A further reason for explaining the increasing of the belt resistance in presence of the stresses required in use can be determined by the belting effect formed by the fibers longitudinally directed to the belt with regard to the layers with fibers transversally directed and compressive loaded in the contact with the groove of the pulley.

The present invention will be better understood by the following detailed description made by way of non-limiting example with reference to the Figures of the attached sheets of drawing in which:

Figure 1 is a partial perspective view of the belt according to the invention;

Figure 2 is a sketch of the thickness of a layer embedding fibers as regards the length of one fiber;

Figure 3 is a further partial view of the belt of Figure 1;

Figure 4 shows at a) a particular of the belt of Figure 1 under load and at b) the equivalence between the tooth of the V-belt and a beam having a critical load at which an elastic buckling occurs.

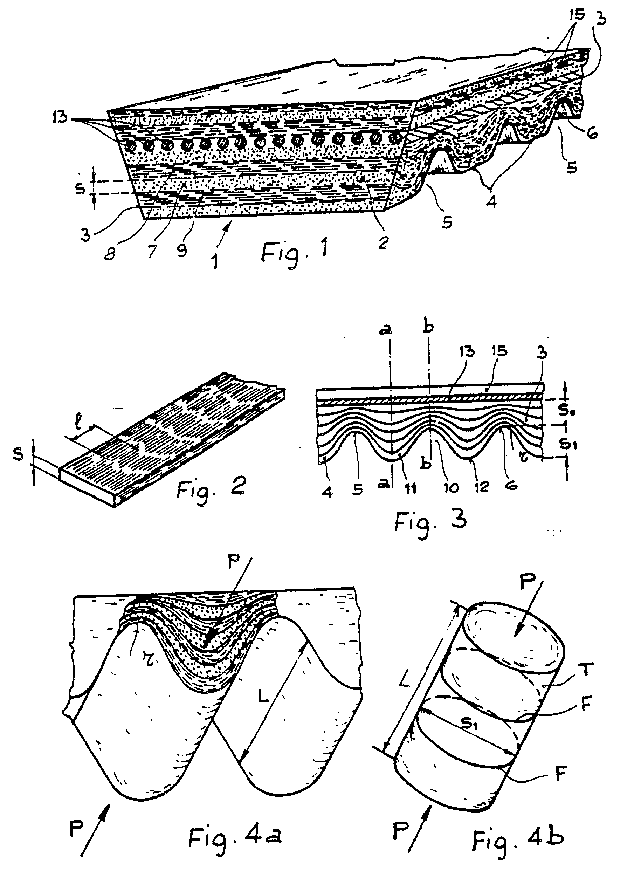

In Figure 1, reference numeral 1 indicates a V-belt comprising a body of elastomeric material having a portion 2 delimited by flanks 3 apt to contact corresponding surfaces of the groove of a pulley and a cogging in the lower part constituted by a plurality of teeth 4 alternating to spaces 5 disposed transversally to the longitudinal direction of the belt and projecting from the inner surface 6 of the belt.

The teeth occupy substantially the belt portion delimited laterally by the flanks apt to get into contact with the flanks of the relative pulley.

The portion 2 of the belt 1 comprises a plurality of elastomeric layers, with a hardness comprised in some realizations between 80 and 90 Shore A.

Each layer of the portion 2 embeds a plurality of fibers oriented in a single direction, i.e. substantially in the longitudinal direction or substantially in the transversal direction of the belt; the various layers of the portion 2 are intercalated between them so that whichever their number is, any layer 7 with fibers oriented for instance in the longitudinal direction of the belt is firstly joined with an adhesive and then chemically bound through a cross-linking operation to two adjacent layers 8, 9, an upper one and a lower one, both having fibers oriented in the transversal direction.

The expression substantially oriented according to the longitudinal and transversal direction of the belt as used herein is intended to indicate the fact that the fibers embedded in a layer can be inclined with angles comprised between $+5°$ and $-5°$ with respect to the longitudinal direction the belt, while in the layers adjacent to said layer the fibers are oriented with angles comprised between $85°$ and $95°$ always with respect to the longitudinal direction of the belt.

The fibers embedded in the layers can be of various type in particular of a mineral material as the glass, or textile material, as for instance the aramidic resins known as Kevlar, or a like substantially inextensible material as nylon, polyester or rayon.

For the purposes of the invention, the layers of the portion 2 have also the essential peculiarity of a thickness linked to the maximum length of the fibers immersed in said thickness.

According to the invention, the thickness s in any whatsoever layer (Figure 2) is less than the average length l of the fibers according to the formula:

$$s \leqq l.$$

Preferably the thickness is less than one half of the average length of the fibers.

The fibers have a length comprised between 0.5 and 5 mm and a diameter comprised between 10 $\mu$ and 400 $\mu$.

In a particular example in which the fibers are of Kevlar with an average length $l = 1.5$ mm, the thickness s is of 0.4 mm.

In one of the possible realizations the belt comprises above the portion 2 delimited by the flanks apt to contact the pulleys, a plurality of steel or Kevlar cords 13, coplanar to one another and directed according to the longitudinal direction of the belt.

Also in a further embodiment, further layers 15 of elastomeric material embedding fibers disposed according to alternating layers as in the underlying part can be arranged above the cords 13.

The layers having the fibers oriented according to pre-determined directions in the portion 2 assume a particular path in the vulcanized belt as it can be noted in the two transversal section planes a-a and b-b of the belt (Figure 3).

The height of the tooth varies from a minimum value $s_0$ in correspondance of the space 10 comprised between the two teeth 11 and 12 to a maximum value $s_1$ in correspondance of the tooth center line.

As it can be noted in Figure 3, the "shaping" of the tooth during the moulding process modifies the arrangement of the layers making them assume a shape which becomes liker and liker that of the tooth as the layers move away from the inner zone of the reinforcing cords 13 and get near the inner surface of the belt.

This occurs in consequence of the thinning of the layers in the intermediate zones between the teeth and in consequence of the thickening in the zones of the teeth. The elastomer forming the layers is thus eliminated from the thinning zones and inserted into the thickening zones, originating the final arrangement of the layers shown in Figure 3.

In order to avoid that besides the elastomer flow there is also a movement of the fibers, the thickness $s_0$ shall never be less than the value resulting from the product of the diameter of the fibers multiplied by the number of the layers.

Of course, according to the principle of the invention the thickness of each layer in correspondence of the center line of the teeth is less or at most equal to the average length of the fibers.

According to some examples $s_0$ can be comprised between 5% and 20% of $s_1$.

As it will be cleared up hereinafter, it is found suitable to use a solution with a predetermined ratio between the width L at the root of each tooth measured transversally to the longitudinal direction of the belt and the maximum height $s_1$ of the belt tooth projecting from the inner surface 6.

Preferably, the ratio $L : s_1$ is comprised between 3 and 6.

According to a further advantageous solution the ratio between the pitch p of the teeth and the depth of the space is comprised between 0.6 and 1.

In the cited realizations, the space can have a trapezium or curvilinear profile. In case of very deep space in some applications a further improvement could be obtained by using a curvilinear profile and binding the radius of curvature r of the space bottom to the depth.

In these cases, for belts having a certain rigidity, the ratio between the radius of the space bottom and the space depth is greater than 0.1 and i.e. $r/s_1 > 0.1$.

In one of the many possible solutions, the manufacturing process of the present belt is carried out by making recourse to a building drum and to a flat press for realizing the portion 2 comprising the various layers with fibers oriented in the two directions perpendicular to each other.

The press, not shown, is provided with flat platens and comprises a first smooth platen and a second platen which can be drawn near or moved away from the first one provided with a toothing corresponding to that of the belt.

The platens are preferably provided with heating means. On the fixed platen there are piled up the thin sheets of elastomeric material comprising the fibers oriented alternatively to thin sheets with a previous calendering process carried out separately.

The pack of thin sheets is formed with a set of grooves and ribs corresponding to the belt teeth by drawing the platens near each other.

During the step of penetration of the mould ribs, the thickness of the material is reduced in correspondence of the spaces and at the same time the teeth are formed through the compression action, as shown in Figure 3 relative to the finished belt.

The steps of the manufacturing process are further completed by positioning directly on the mould the unfinished product thus obtained and which corresponds to the portion 2 of the belt provided with the toothing.

Subsequently, on this unfinished product there are placed the wound cords 13 of steel, or Kevlar or other less extensible material and on said cords there are disposed the layers or the furthermost thin sheets.

Finally, the whole is subjected to the vulcanizing process.

For the purposes of the results achieved with the cited solution, the calendering step necessary for embedding the fibers into the elastomeric layers is of particular importance in the process.

Surprisingly it is found as decisive for obtaining a suitable resistance, to calender the various sheets apt to form the portion 2 of the belt with a thickness layer or at most equal to the average length of the fibers embedded in each layer.

The invention, of which the previous cited figures constitute only a realization, permits to obtain all the aimed purposes.

Firstly the belt results to have a considerably improved performance on the pulleys with reduced diameter.

This result is rather unexpected since it has been reached by using a plurality of reinforcing layers characterized by fibers oriented in the longitudinal direction alternating with fibers oriented in the transversal direction.

It is found that a high flexibility of the belt, suitable for different applications of considerable heaviness, is also obtained with a high number of layers and reinforcing elements.

Moreover the transversal stability of the belt in presence of compressive loads transmitted by the flanks of the pulley can be driven at the maximum in the present realizations for the particular distribution of the layers with fibers as shown in the Figures 3 and 4a.

In fact, in the contact between the belt flanks and the pulley flanks, the tooth of width L and height $s_1$ would behave as the beam T, of height L and diameter $s_1$ (Figure 4b) subjected to a compressive loads P equivalent to the compressive thrust received on the flanks of the belt tooth.

The reference numeral F in Figure 4b indicates encircling elements that, as known, are applied to increase the stability of the structure and to permit the application of loads P greater than those which could be applied in safety conditions if the said encircling elements should not be present.

The presence of fibers oriented toward the longitudinal direction in the alternate layers of the belt tooth produces an effect like that of the elements F in the beam. The increasing of the tooth stability to the compressive stresses noted in the realizations according to the present invention is thus explained.

In practice said tooth has very reduced deformations and maintains thus its original configuration since the compressive load P is absorbed by the layers comprising the transversal fibers and these latter on their turn are contained by the belting effect represented by the layers with longitudinal fibers.

Therefore that which is essential for the purposes of the present invention is the fact of having distributed the fibers in the predetermined and desired directions to obtain the more suitable resistance and i.e. in the longitudinal direction to constitute the belting effect referred to before and in the transversal direction to absorb the compressive loads without swellings of the tooth subjected to stresses occuring.

This result, as said, has been obtained for the characteristic of the thicknesses of the layers having values lower than the average length of the fibers so as to make the maintaining of the undirectional path of the fibers sure since the calendering steps, i.e. the predisposition where it is thought that the more important stresses to which the belt is subjected can really occur.

In combination with what already said, it is found also valid for the purposes of the invention and the achieved stability, to make recourse to a choice of a ratio $L/s_1$ with the above specified values.

In other words it is found that for a value of $s_1$ maintained within the previously cited levels there is obtained a dimensional stability of the tooth of width L.

Although some particular embodiments of the present invention have been illustrated and described, it is understood that the present invention includes in its scope any other alternative embodiment accessible to a technician of this field; for instance the invention is also directed to a V-belt with a substantially hexagonal section, i.e. to a belt in which a substantially symmetrical portion of the belt is symmetrically overlapped with respect to the plane containing the cords 13 to a first part constituted as shown in Figure 1.

Of course, it can be thought that the belt shown in the Figure 1 is one of the many belts placed side by side and constituting a single transmission element, i.e. a belt in which the upper part is connected to a flat portion and the lower parts are constituted by a plurality of belts separated by grooves that correspond to the grooves of a pulley having a plurality of grooves.

The invention is also directed to belts whose material embedding the fibers can be polyurethane or neoprene or a viscoeleastomeric material usually used in the transmission of motion between a belt and the relative pulleys.

**Claims**

1. V-belt (1) comprising a body of polymeric flexible material, a plurality of inextensible cords (13) arranged parallelly to one another on a ring concentric with the belt and oriented according to the longitudinal direction of the belt, a portion (2) of said body, below the said cords, being delimited by flanks (3) adapted to contact corresponding surfaces of the groove of a pulley in a transmission system, at lesat said portion (2) comprising a plurality of layers (7), said belt being characterized in that each layer has fibers oriented in a single direction, the layers alternately overlapping with one layer having fibers substantially oriented in the longitudinal direction, and another layer having fibers oriented in a substantially transverse direction, the said plurality of layers comprising a layer with fibers oriented in one of said two directions, bonded with two adjacent layers, both having fibers oriented in the other of said directions, the thickness (S) of each layer being less than, or at most, equal to the average length of the fibers present in the layer.

2. V-belt as in claim 1, characterized by the fact that the thickness of the layer comprising the fibers oriented in one direction is less or at most equal to one half of the average length of the fibers immersed in said layer.

3. V-belt as in claim 1 or 2, characterized by the fact of comprising a plurality of teeth (4) arranged transversally to the longitudinal direction of the belt in said portion delimited by flanks, said layers in correspondance of the said teeth having a greater thickness with respect to the layers arranged in the remaining part of the belt.

4. V-belt as in claim 3, characterized by the fact that the thickness ($s_0$) of the layers in correspondence of the center line between two teeth varies between 5% and 20% of the thickness ($s_1$) of the layers themselves in correspondence of the tooth center line, said thicknesses being measured according to planes perpendicular to the longitudinal direction of the belt.

5. V-belt as in claim 3 or 4, characterized by the fact that the ratio between the width (L) of each tooth measured at the root of the tooth transversally to the longitudinal direction of the belt and the height ($s_1$) of the tooth projecting from the inner surface of the belt is comprised in the range between 3 and 6.

6. V-belt as in claim 1, characterized by the fact that the ratio between phe pitch of the teeth and the depth of the space between the teeth is comprised between 0.6 and 1.

7. V-belt as in claim 3, characterized by the fact that the space has a curvilinear profile and the ratio between the radius of curvature (r) of the space and the depth of the space ($s_1$) is greater than 0.1.

8. V-belt as in any of the preceding claims, characterized by the fact of comprising a plurality of inextensible cords (13) coplanar to one another and oriented in the longitudinal direction of the belt in a position immediately upper to said portion delimited by flanks apt to go into contact with the relative pulley.

9. V-belt as in claim 8 characterized by the fact that layers (15) of polymeric flexible material with fibers oriented in a single direction are disposed over said cords, the layers being overlapped alternatively the ones with the fibers oriented substantially in longitudinal direction, the others in substantially transversal direction, the thickness of each layer being less or at most equal to the average length of the fibers embedded in each of said layers.

**Patentansprüche**

1. Keilriemen (1), umfassend einen Körper aus polymerem biegsamen Material, wobei eine Mehrzahl von undehnbaren Schnüren (13) parallel zueinander in einem Ring konzentrisch zu dem Riemen angeordnet und in Übereinstimmung mit der Längsrichtung des Riemens orientiert ist, ein Teil (2) des Körpers unter den Schnüren durch Flanken (3) begrenzt ist, die mit entsprechenden Flächen der Nut einer Riemenscheibe in einem Übertragungssystem in Berührung treten können, und wobei wenigstens dieser genannte Teil (2) eine Mehrzahl von Lagen (7) aufweist, dadurch gekennzeichnet, daß jede Lage in einer einzigen Richtung orientierte Fasern hat, die Lagen abwechselnd übereinander liegen, wobei eine Lage Fasern hat, die im wesentlichen in der Längsrichtung orientiert sind, und eine andere Lage Fasern hat, die in einer im wesentlichen quer verlaufenden Richtung orientiert sind, wobei die genannte Mehrzahl von Lagen eine Lage mit Fasern, die in einer der beiden Richtungen orientiert sind, umfaßt, die mit zwei benachbarten Lagen verbunden ist, die beide Fasern haben, die in der anderen der beiden Richtungen orientiert sind, und wobei die Dicke (S) jeder Lage geringer oder höchstens gleich der durchschnittlichen Länge der in der Lage vorhandenen Fasern ist.

2. Keilriemen nach Anspruch 1, dadurch gekennzeichnet, daß die Dicke der Lage, die in einer Richtung orientierte Fasern enthält, kleiner oder höchstens gleich der Hälfte der mittleren Länge der in diese Lage einebetteten Fasern ist.

3. Keilriemen nach Anspruch 1 oder 2, dadurch gekennzeichnet, daß eine Mehrzahl von Zähnen (4) vorgesehen ist, die quer zur Längsrichtung des Riemens in dem durch die Flanken begrenzten Teil angeordnet sind, und die Lagen entsprechend den Zähnen mit Bezug auf die Lagen eine größere Dicke haben, die in dem übrigen Teil des Riemens angeordnet sind.

4. Keilriemen nach Anspruch 3, dadurch gekennzeichnet, daß die Dicke ($s_0$) der Lagen in Entsprechung der Mittellinie zwischen zwei Zähnen sich zwischen 5% und 20% der Dicke ($s_1$) der Lagen selbst in Entsprechung zur Zahnmittellinie ändert, wobei die Dicken gemessen sind in Übereinstimmung mit Ebenen rechtwinklig zur Längsrichtung des Riemens.

5. Keilriemen nach Anspruch 3 oder 4, dadurch gekennzeichnet, daß das Verhältnis zwischen der Breite (L) jedes Zahnes, gemessen an der Wurzel des Zahnes quer zur Längsrichtung des Riemens, und der Höhe ($s_1$) des Zahnes, vorragend von der Innenfläche des Riemens, im Bereich zwischen 3 und 6 liegt.

6. Keilriemen nach Anspruch 1, dadurch gekennzeichnet, daß das Verhältnis zwischen der Teilung der Zähne und der Tiefe des Abstandes zwischen den Zähnen zwischen 0,6 und 1 liegt.

7. Keilriemen nach Anspruch 3, dadurch gekennzeichnet, daß die Zahnlücke krummliniges Profil hat und das Verhältnis zwischen dem Krümmungsradius (r) der Zahnlücke und der Tiefe der Zahnlücke ($s_1$) größer als 0,1 ist.

8. Keilriemen nach irgendeinem der vorhergehenden Ansprüche, dadurch gekennzeichnet, daß eine Mehrzahl von undehnbaren Schnüren (13), die koplanar zueinander liegen und in der Längsrichtung des Riemens orientiert sind, in einer Position unmittelbar über dem Teil vorgesehen sind, der durch die Flanken begrenzt ist, die mit der zugehörigen Riemenscheibe in Berührung treten können.

9. Keilriemen nach Anspruch 8, dadurch gekennzeichnet, daß Lagen (15) aus polymerem biegsamem Material mit in einer einzigen Richtung orientierten Fasern über den Schnüren angeordnet sind, wobei die Lagen abwechselnd mit Lagen übereinanderliegen, die Fasern haben, welche im wesentlichen in Längsrichtung orientiert sind, die anderen im wesentlichen in Querrichtung orientiert sind, und wobei die Dicke jeder Lage geringer oder höchstens gleich der durchschnittlichen Länge der in jeder der Lagen eingebetteten Fasern ist.

**Revendications**

1. Courroie trapézoïdale (1) comprenant un corps consistant en une matière polymère flexible, une pluralité de cordes (13) non extensibles étant arrangées en parallèle dans un anneau concentriquement rélativement à la courroie et étant orientées conformément à la direction longitudinale de la courroie, une partie (2) du corps sous les cordes étant limitée par des flancs (3) adaptés pour contacter des surfaces correspondantes de la rainure d'une poulie dans un système de transmission, au moins cette partie (2) mentionnée comprenant une pluralité de couches, caractérisée en ce que chaque couche a des fibres orientées dans une seule direction, que les couches sont superposées alternativement, une des ces couches ayant des fibres en substance orientées dans la direction longitudinale, et une autre de ces couches ayant des fibres orientées dans une direction en substance transversale, la pluralité mentionnée de couches comprenant une couche avec des fibres orientées dans une des deux directions, qui est jointe à deux couches contigües ayant toutes les deux des fibres orientées dans l'autre des directions mentionnées, l'épaisseur (S) de chacune des couches étant plus faible que ou au maximum égale à la longueur moyenne des fibres se trouvant dans la couche.

2. Courroie trapézoïdale selon la revendication 1, caractérisée en ce que l'épaisseur de la couche comprenant des fibres orientées dans une direction est plus faible ou au maximum égale à la moitié de la longueur moyenne des fibres immergées dans cette couche.

3. Courroie trapézoïdale selon la revendication 1 ou 2, caractérisée en ce qu'une pluralité de dents (4) est prévue qui sont arrangées transversalement rélativement à la direction longitudinale de la courroie dans la partie limitée par des flancs, les couches conformément aux dents ayant une épaisseur plus grande rélativement aux couches arrangées dans la partie restante de la courroie.

4. Courroie trapézoïale selon la revendication 3, caractérisée en ce que l'épaisseur ($s_0$) des couches conformément à la ligne médiane entre deux dents varie entre 5 and 20 pourcents de l'épaisseur ($s_1$) des couches elles-mêmes conformément à la ligne médiane des dents, ces épaisseurs étant mesurées en accord avec des plans perpendiculaires à la direction longitudinale de la courroie.

5. Courroie trapézoïdale selon la revendication 3 ou 4, caractérisée en ce que le rapport entre la largeur (L) de chacune des dents mesurée à la racine de la dent transversalement rélativement à la direction longitudinale de la courroie, et la hauteur ($s_1$) de la dent, émergeante de la surface intérieure de la courroie, est dans la portée entre 3 et 6.

6. Courroie trapézoïdale selon la revendication 1, caractérisée en ce que le rapport entre l'écart des dents et la profondeur de l'interstice entre les dents est dans la portée entre 0,6 et 1.

7. Courroie trapézoïdale selon la revendication 3, carcatérisée en ce que l'interstice a un profil curviligne et le rapport entre le rayon (r) de la courbure de l'interstice et la profondeur de l'interstice ($s_1$) est plus grand que 0,1.

8. Courroie trapézoïdale selon une des revendications précédentes, caractérisée en ce qu' une pluralité de cordes (13) non extensibles coplanaires l'un à l'autre et orientés dans la direction longitudinale de la courroie est prévue dans une position immédiatement au-dessus de la partie limitée par des flancs étant propres à contacter la poulie appartenante.

9. Courroie trapézoïdale selon la revendication 8, caractérisée en ce que des couches (15) consistant en une matière polymére flexible avec des fibres orientées dans une seule direction sont arrangées au-dessus de ces cordes, les couches étant superposées alternativement, les unes avec les fibres orientées en substance dans la direction longitudinale, les autres dans la direction en substance transversale, l'épaisseur de chacune des couches étant plus faible ou au maximum égalé à la longueur moyenne des fibres immergées dans chacune de ces couches.

Fig. 1

Fig. 2

Fig. 3

Fig. 4a

Fig. 4b